# EUROPEAN PATENT APPLICATION

(11) **EP 1 321 543 A1**
(43) Date of publication of application: **25.06.2003**
(21) Application number: 01130156.1
(22) Date of filing: 19.12.2001
(51) Int. Cl.: C25B 1/04

(54) **Hydrolysis cell and its use in wind power generation system**

(71) Applicant: ALSTOM (Switzerland) Ltd, 5401 Baden (CH)
(72) Inventor: Lacaze, Alain, 90850 Essert (FR)

(57) **Abstract**

A hydrolysis cell for the conversion of kinetic energy into chemical energy is proposed. It is characterised in that the electrical current (18) for the cleavage process is provided via the rotation of at least one disc (9,10) in a strong, substantially constant magnetic field (17) oriented substantially parallel to the rotational axis (5) of said disc (9,10). Thus a very simple and effective conversion is provided which e.g. allows the levelling of fluctuations in available kinetic energy in windmill power systems.

## Description

### TECHNICAL FIELD

The present invention relates to hydrolysis cells for the conversion of kinetic energy into chemical energy. More particularly, it is concerned with hydrolysis cells for the conversion of water into hydrogen gas and oxygen gas, and the use of such hydrolysis cells for the conversion of rotational energy provided by a windmill, and for the levelling of fluctuations of available rotational energy. Additionally, a new process for the hydrolysis of water into hydrogen gas and oxygen gas is presented, as well as a wind power generation system using such hydrolysis cell or a process for the hydrolysis.

### BACKGROUND OF THE INVENTION

In the field of the conversion of kinetic energy into chemical energy, in particular if the chemical energy is to be produced in a hydrolytic process, one of the major problems has always been that the kinetic rotational energy, for example provided by a windmill, a water turbine or a water wheel, first had to be converted by means of a generator into an electrical current, which was then subsequently used for the hydrolytic process in a hydrolysis cell. Hydrolysis requires a very low voltage, a few volts, but very high current. With regard to power in the MW range, current will be several hundreds of amperes.

However, as is for example outlined in US 5,592,028, it is highly desirable, in particular in the case where the kinetic energy is provided by windmills, to be able to level the output of a wind farm by means of storing energy in some chemical form.

A wind farm is a power generation system, which uses windmills connected to generators to generate electricity from wind power. The most stringent problem in wind power systems is the highly variable wind velocity. Power generation usually starts as soon as wind velocity exceeds 3 m/s. It should be stopped when wind velocity exceeds 25 m/s, for safety reasons. Unfortunately there's no way to control wind delivery. When wind sets are implemented in wind farms, or as single units, power generation and consumption should fit each other. An appropriate mean of storing and generating energy would allow levelling of the discrepancy between available wind and required output power. As usually this levelling is not possible in wind farms, they are too unreliable as concerns constant electricity output and often their contribution to grid systems can only be quite small.

### SUMMARY OF THE INVENTION

The objective problem underlying the present invention is therefore to provide a hydrolysis cell allowing efficient and simple conversion of kinetic energy into chemical energy.

The above-mentioned state-of-the-art cannot solve this problem, as it uses a switch/transformer which converts the kinetic energy into an electrical current prior to using this energy in the hydrolytic process. This is not only cumbersome, but also inefficient.

The present invention solves the above problem by directly providing a very low voltage high current electricity for the hydrolysis process by means of a rotating disc in a strong, substantially constant magnetic field, parallel to the rotational axis.

The object of the present invention is therefore a hydrolysis cell for the conversion of kinetic rotational energy into chemical energy which is characterised by the fact that the electrical current required for the cleavage process is provided by means of the rotation of at least one disc in a strong, substantially constant magnetic field which is oriented substantially parallel to the rotation axis of said disc.

Key feature of the present invention is therefore the fact that the rotational energy is directly converted into chemical energy without intermediate conversion into an electrical current by means of a generator, switch or transformer. The rotating disc in a strong magnetic field is a simple, direct way to produce the high current with low voltage required for hydrolysis.

In a first preferred embodiment of the present invention the energy conversion is the electrochemical cleavage of water into hydrogen gas and oxygen gas. In this case, the conversion is particularly simple as water is usually readily available.

In a further preferred embodiment at least one disc at least partially immerses into an immersion bath of water and thereby directly serves as electrode for the hydrolytic process. This allows the direct and immediate use of the kinetic energy in the electrochemical process. No intermediate wiring, conversion units like generators, transformers, switches or the like are necessary. The arrangement is particularly simple if, as preferred in another embodiment, the cell contains at least two discs, one of them serving as the cathode, the other as the anode.

In a further preferred embodiment the hydrolysis cell comprises two chambers sealed from each other, the first chamber for the accommodation of hydrogen gas, the second for the accommodation of oxygen gas. It comprises an immersing bath of water, one part of which is located in the first chamber while another part is located in the second chamber, whereby means are provided to allow the circulation between the two parts, it comprises at least two discs which are substantially perpendicularly mounted on a common, substantially horizontal shaft which is located above the immersing bath, whereby said discs are spaced from each other, whereby at least one of the discs is located in the first chamber and another disc is located in the second chamber, each of the discs immersing at least partially into the immersion bath and whereby the discs are electrically connected with each other via the shaft. As usually in such a generation of electrical current brush and slip rings are required because the current should return along a non rotating path, the idea here is to directly use the water as the slipping connection. The magnetic field can thereby be produced by coils or by permanent magnets. It is additionally advantageous to provide equipment allowing to compress and store hydrogen and to process it into another fuel.

Another object of the present invention is the use of such hydrolysis cells for the conversion of kinetic energy into chemical energy, in particular for the conversion of rotational energy provided by a windmill or turbines driven by water or other media. Another preferred use of the above hydrolysis cells is aimed at levelling of fluctuations of the available kinetic energy. This is particularly useful, for example, if such a hydrolysis cell is used in wind power generation systems.

Another preferred embodiment concerns a process for the hydrolysis of water into hydrogen gas and oxygen gas, which is characterised by the fact that kinetic energy is used for the cleavage and in that the electrical current for the cleavage process is provided by means of rotation of at least one disc in a strong, substantially constant magnetic field oriented substantially parallel to the rotational axis of said disc. This particularly efficient process without intermediate steps can be used for any production of either hydrogen gas or oxygen gas.

An additional object of the present invention is a wind power generation system comprising a windmill and a hydrolysis cell and in particular a process for operating such a windmill which is characterised in that in times of high winds and low power remuneration in the power grid system, the kinetic energy provided by the windmill is at least partially converted into chemical energy, while in times of high power remuneration and/or low winds this chemical energy is used for the generation of electrical energy for the power grid system. The particularly simple conversion between kinetic energy and chemical energy is outstandingly suitable for adapting the output of such a windmill to actual needs.

Further embodiments of the present invention are outlined in the dependent claims.

### SHORT DESCRIPTION OF THE FIGURES

In the accompanying drawings preferred embodiments of the invention are shown in which:
- Fig. 1: is a schematic diagram showing a windmill with an enlarged section displaying the integrated hydrolysis cell for the conversion into chemical energy;
- Fig. 2: is the detailed view of the hydrolysis cell as given in Figure 1 indicating the magnetic field is as well as the current flowing between the two electrodes.

### DETAILED DESCRIPTION OF THE PREFERRED EMBODYMENTS

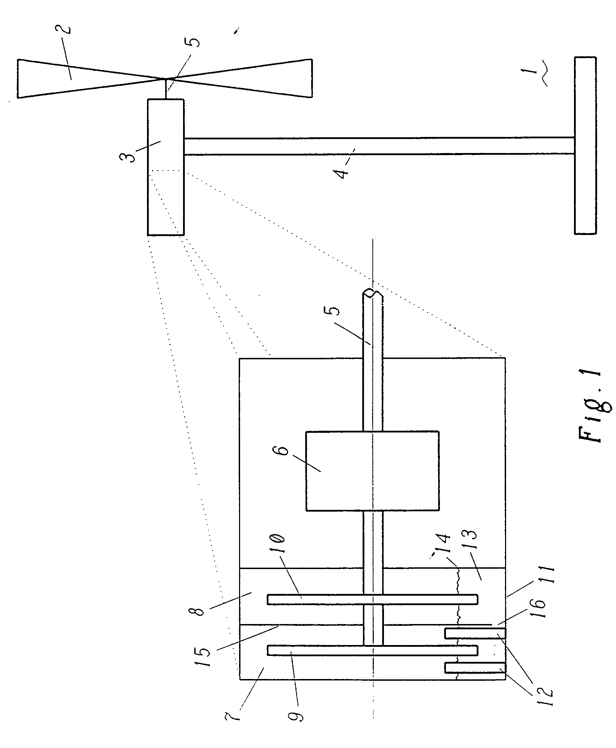

Referring to the drawings, which are for the purpose of illustrating the present preferred embodiments of the invention and not for the purpose of limiting the same, Figure 1 displays a windmill 1 where a central unit 3 is mounted on a pillar 4. The central unit is mounted adjustably such that the orientation of the rotor of the windmill can usually be adapted to varying wind conditions. The central unit 3 carries the shaft 5 onto which the blades 2 of the wheel of the windmill 1 are mounted. It has to be noted that such windmills can only be operated if wind velocity exceeds 3 m/s and have to be stopped when wind exceeds 25 m/s, for safety reasons. Usually the orientation of windmills is controlled by a central control unit which not only orients different windmills of a wind farm with respect to the wind but also with respect to each other as the relative incidence of wind can be very important. As mentioned above, the varying wind conditions and the related variation in power production of these windmills are one of the problems preventing important use of such power production plants in power grids.

The detailed view on the left part of the figure displays a central vertical cut through the rear part of the central unit 3. The shaft 5 is directly connected to a generator 6, and the whole unit is surrounded by a housing 11. This is the conventional set-up of a windmill, where then the electrical energy generated in the generator 6 is conducted via electrical conductors through the pillar to a central station. In this central station input from different windmills is gathered and transformed if necessary to the conditions as required by the power grid into is to the power should be fed.

In addition to generator 6, according to the present invention there is mounted two discs 9 and 10 on the same shaft 5 within the housing 11. Disc 10 is located closer to the generator while disc 9 is attached to the end of shaft 5. The two discs 9 and 10 are mounted parallel to each other perpendicularly to the axis of shaft 5. The two discs 9 and 10 are separated from each other and between the two discs there is a separating wall 15, which sealingly separates the airspace in which the two discs 9 and 10 are located, namely the chambers 7 and 8, respectively. An additional separating wall is provided to separate the inside of the housing in which the generator 6 is located from chamber 8 adjacent to the space of the generator 6. Chamber 7 is provided to accommodate hydrogen gas, while chamber 8 is there to accommodate oxygen gas.

In the lower part of the two chambers there is an immersing bath of water 13. The separating wall 15 does not extend to the very bottom of housing 11 but leaves a gap in the form of a water channel 16 allowing water of the immersing bath 13 to exchange between the two chambers 7 and 8. The level of this immersing bath 13 has to be such that the airspace above the level of the surface 14 of the immersing bath 13 of water is higher than gap 16 but also lower than the height of shaft 5. In particular the first condition, namely that it has to be higher than gap 16 has to be carefully watched, as in case of exchange of gas between the two chambers a very dangerous and explosive mixture of hydrogen and oxygen gas can build up. It may therefore be advisable to design a particular water channel 16 which even if the discs rotate at high speed prevents any exchange of gas between the two chambers 7 and 8.

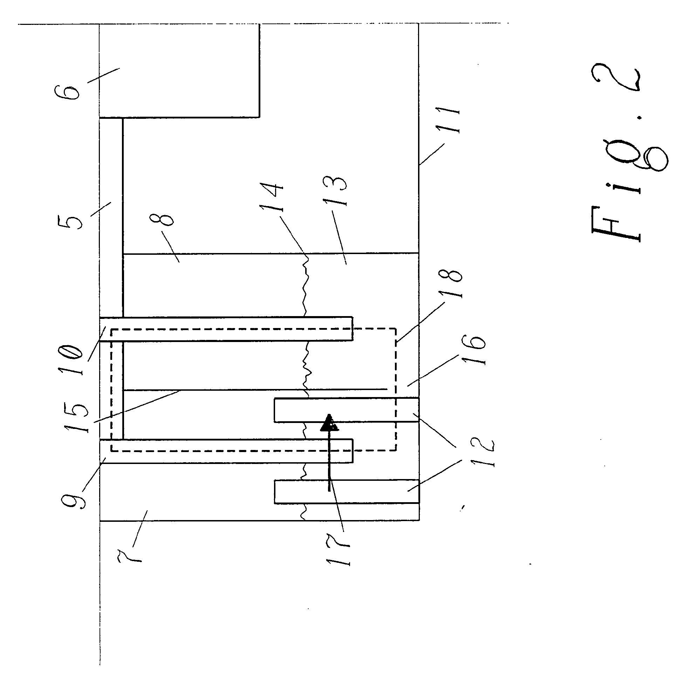

Figure 2 shows the detailed view of the lower part of the cut-out in figure 1. It additionally displays the poles 12 of a magnet. This magnetic field can be produced by either coils or by permanent magnets. The magnetic field, as indicated by arrows 17, has to be substantially perpendicular to the corresponding disc for high efficiency. In the case displayed here, there's only one magnet which surrounds disc 9, but it is also conceivable, in that additionally there's another magnet surrounding the second disc 10.

The two discs 9 and 10 are electrically connected via shaft 5. If the two discs 9 and 10 are rotated by the wind via the wheel around the shaft 5, the magnetic field 17 induces electrical current 18 as then due to the Lorentz force electrons are forced to move in a radial direction which is perpendicular to the magnetic field 17 as well as perpendicular to the movement given by the rotation of the disc (which movement vector is tangential to the disc). The electrical current 18 induced in disc 9 follows the path 18 along the shaft 5 into disc 10 and ends up in the outer portion of disc 10 which dips into the immersing bath 13. The electrical potential thus produced between the two discs serving as electrodes can produce low voltage but very high current and is sufficient to hydrolyse the water in the immersing bath 13. This particular design, avoiding brush and slip rings to collect the current and to avoid it to return along a rotating path is very simple and cheap to produce.

Additional equipment should be provided to compress and store hydrogen being formed in chamber 7. That means pipes (not displayed) should be provided connected to chamber 7 conducting hydrogen gas to a compressor (not displayed) which itself is connected to a gas tank. This allows continuous gathering of chemical energy stored in the form of hydrogen gas which is subsequently available to be burnt for example in fuel cells in times where wind energy is not available or when power remuneration is particularly high.

The proposed system can be fitted to any existing design of generator a wind system. The fact that brush and slip rings are avoided makes the whole set-up almost maintenance free. An additional advantage is that it can be used as a brake, which is currently a high cost item in wind sets. Additionally the hydrolysis cell can be used in case of very weak wind to produce hydrogen gas where a usual wind set would produce nothing worth. It can, on the other hand, be operated when the wind is very strong, with a low incidence angle. It can as well stay in useful operation under rapidly varying wind conditions.

One principal advantage of the present concept is however, that it allows to balance between fuel and power delivery, with respect to the actual power requirements and wind availability. In times of low power remuneration/need and high winds the available power can easily be used for the production of hydrogen gas. This hydrogen gas can then be used for example in fuel cells in times of either low winds or particularly high power remuneration to increase the power output of the windmill. This is a very efficient manner of levelling and optimising the power output of such windmills, which may allow the incorporation of larger numbers of windmills into power grids due to the larger reliability and adaptability of the windmills. Depending on needs, the system can be designed with main production being hydrogen or being electrical power. The concept can even be extended to any kind of power generation system where the overall efficiency depends on unstable mechanical power production.

### REFERENCE NUMERALS

- 1: Windmill
- 2: Blade
- 3: Central unit
- 4: Pillar
- 5: Shaft
- 6: Generator
- 7: H₂ chamber
- 8: O₂ chamber
- 9: First disc
- 10: Second disc
- 11: Housing
- 12: Poles
- 13: Immersing bath of water
- 14: Surface of 13
- 15: Separating wall
- 16: Water channel
- 17: Magnetic field
- 18: Current path

## Claims

1. Hydrolysis cell for the conversion of kinetic energy into chemical energy, **characterised in that** the electrical current (18) for the cleavage process is provided via the rotation of at least one disc (9,10) in a strong, substantially constant magnetic field (17) oriented substantially parallel to the rotational axis (5) of said disc (9,10).

2. Hydrolysis cell according to claim 1, **characterised in that** the energy conversion is the electrochemical cleavage of water into hydrogen gas and oxygen gas.

3. Hydrolysis cell according to claim 2, **characterised in that** the at least one disc (9,10) at least partially immerses into an immersion bath (13) of water and thereby serves as electrode for the hydrolytic process.

4. Hydrolysis cell according to claim 3, **characterised in that** the cell contains at least two discs (9,10) one of them serving as the cathode, the other as the anode.

5. Hydrolysis cell according to claim 4, **characterised in that** the hydrolysis cell comprises two chambers (7,8) sealed from each other, the first chamber (7) for the accommodation of hydrogen gas (H₂), the second (8) for the accommodation of oxygen gas (O₂), that
the hydrolysis cell comprises an immersing bath (13) of water, one part of which is located in the first chamber (7) while another part is located in the second chamber (8), whereby means (16) are provided to allow the circulation between the two parts, at least two discs (9,10) which are substantially perpendicularly mounted on a common, substantially horizontal shaft (5) which is located above the immersing bath (13),
whereby said discs (9,10) are spaced from each other,
whereby at least one of the discs (9) is located in the first chamber (7) and another disc (10) is located in the second chamber (8), each of the discs immersing at least partially into the immersion bath (13) and
whereby the discs (9,10) are electrically connected with each other via the shaft (5).

6. Hydrolysis cell according to one of the previous claims **characterised in that** the magnetic field (17) is a DC field produced by coils or by permanent magnets.

7. Use of a hydrolysis cell according to one of the claims 1-6 for the conversion of kinetic energy into chemical energy, in particular for the conversion of rotational energy provided by a windmill.

8. Use of a hydrolysis cell according to one of the claims 1-6 for the levelling of fluctuations of the available rotational energy.

9. Use of a hydrolysis cell according to one of the claims 1-6 in wind power generation systems.

10. Process for the hydrolysis of water into hydrogen gas and oxygen gas **characterised in that** kinetic energy is used for the cleavage and **in that** the electrical current (18) for the cleavage process is provided by means of rotation of at least one disc (9,10) in a strong, substantially constant magnetic field (17) oriented substantially parallel to the rotational axis (5) of said disc (9,10).

11. Wind power generation system comprising a windmill (1) and a hydrolysis cell according to one of the claims 1-6.

12. Process for operating a windmill according to claim 11, **characterised in that** in times of high winds and low power remuneration in the power grid system, the kinetic energy provided by the windmill is at least partially converted into chemical energy, while in times of high power remuneration and/or low winds this chemical energy is used for the generation of electrical energy for the power grid system.
